# EUROPEAN PATENT APPLICATION

(11) **EP 2 302 182 A2**
(43) Date of publication of application: **30.03.2011**
(21) Application number: 10171135.6
(22) Date of filing: 28.07.2010
(51) Int. Cl.: F01P 5/12

(54) **Water pump**

(30) Priority: 31.07.2009 JP 2009179356
(71) Applicant: Yamada Manufacturing Co., Ltd., Kiryu-shi, Gunma-ken (JP)
(72) Inventor: Negishi, Ryuichi, Isesaki-shi Gunma (JP); Miyata, Shigetoshi, Isesaki-shi Gunma (JP)
(74) Representative: Skone James, Robert Edmund

(57) **Abstract**

The present invention provides a water pump capable of minimizing the runout of a shaft of an impeller even if a bearing supporting the shaft is provided only at one location. This water pump includes a pump cover, a motor case having a partition wall part, an impeller that is rotatably housed in a pump chamber, a shaft, a radial bearing, a rotor base formed with a shaft connecting part to which the shaft is press-fitted and fixed, an inner magnet that is fixed to an outer periphery of the rotor base, and a stator core mounted in the motor case. A substantially cylindrical bearing housing part is formed in partition wall part, the radial bearing is inserted and fixed to the bearing housing part, the radial bearing is disposed in the rotor base, and an axial direction overall length of the radial bearing is positioned within a substantial area of an axial direction overall length of the inner magnet.

## Description

The present invention relates to a water pump capable of minimizing the runout of a shaft of an impeller even if a bearing supporting the shaft is provided only at one location.

In recent years, expectations and demands for fuel-efficient cars are increasing more than ever from an environmental perspective. Various means are being developed and implemented for achieving low fuel consumption, and the development and implementation of the electrification of various components to be mounted on vehicles pursuant to the hybridization of vehicles are also being advanced with great urgency. Among the above, a water pump is a component that not only cools the engine, it is also responsible for optimizing the temperature (raising and lowering the temperature to become optimal) of the various components in the vehicle, and is a component that is indispensible for a vehicle.

Thus, the development and implementation of the electrification of water pumps are also being advanced with great urgency pursuant to the hybridization of vehicles. Among such electric water pumps, in order to meet the demands of further high efficiency and weight-saving in recent years, a so-called "integrated electric water pump" where a motor part, in which a stator core (electromagnet) of a motor directly rotates and drives an impeller with a built-in magnet, and a pump part are formed integrally is also being developed and implemented. The foregoing pump is hereinafter referred to as the "integrated electric water pump."

With an integrated electric water pump, since the impeller is a rotor, a bearing is disposed for rotatably supporting the rotor. Generally speaking, a bearing is disposed at a total of two locations; specifically, one toward the front and one toward the back in the axial direction of the shaft of the impeller as the rotor. This kind of system is being broadly developed and implemented.

Nevertheless, in addition to the foregoing configuration, there are types in which the bearing of the impeller is disposed at only one location in an integrated electric water pump. An example of this kind of structure is described in Japanese Utility Model Laid-open Publication No. H6-30493.

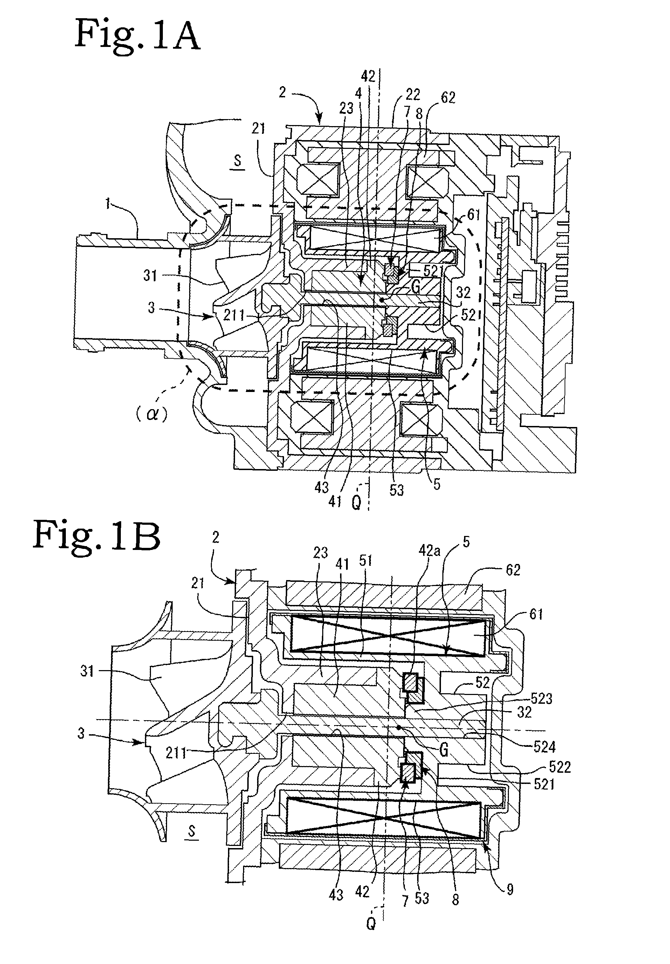

In Japanese Utility Model Laid-open Publication No. H6-30493, as shown in Fig. 1 and described in paragraph [0010] and the like, the bearing is disposed only at one location. In all water pumps without limitation to an integrated electric water pump, the negative pressure of the suction side will increase as the rotation becomes faster, and hardly any negative pressure will occur at a low rotation in a pump chamber provided with an impeller. Specifically, so as long as the impeller is rotating, the suction side will be a negative pressure, but the size of the load on the impeller changes momentarily depending on influences such as the number of rotations and the flow of fluid.

This change is unpredictable and random since factors other than the pump; for instance, engine vibration and the like, become involved. Thus, with a type in which the bearing is integrally mounted on the shaft of the impeller, there are cases where the impeller is pulled strongly and cases where it is pulled weakly to the suction side depending on the size of the negative pressure on the suction side, and, since the load is also placed at a random size, the impeller that is formed integrally with the bearing is subject to random micro vibration in the axial direction and the radial direction.

Thus, the bearing requires a function for preventing the shaft from becoming misaligned in the radial direction and the axial direction. There is a configuration that prevents the misalignment in both the radial direction and the axial direction with one bearing, and a configuration that uses a set of two bearings; namely, a bearing for preventing the misalignment in the radial direction and a bearing for preventing the misalignment in the axial direction. In the ensuing explanation, the bearing for preventing the misalignment in the radial direction is referred to as a radial bearing and the bearing for preventing the misalignment in the axial direction is referred to as a thrust bearing. Based on the suction power caused by the negative pressure, the impeller rotates while repeatedly colliding with the radial bearing and the thrust bearing due to the random micro vibration in the axial direction.

The subject matter of Japanese Utility Model Laid-open Publication No. H6-30493 is briefly explained below. The reference numerals given to the components in Japanese Utility Model Laid-open Publication No. H6-30493 are all indicated in parentheses for differentiation from the reference numerals of the components of the present invention described later. An impeller (10) and a driven magnet part (6a) are integrally coupled with a rotation axis part (11). A bearing (A) is disposed at the middle part of the impeller (10) and the driven magnet (6a). Specifically, the integral member including the impeller (10) will rotate with the bearing (A) as the fulcrum. Moreover, as evident from Fig. 1 of Japanese Utility Model Laid-open Publication No. H6-304934, the position of the axial direction of the drive magnet part (6b) and a driven magnet (6a) and the position of the axial direction of the bearing (A) are disposed in mutual misalignment.

This is a result of the bearing (A) being disposed closer to the impeller (10), and the drive magnet (6b) and the driven magnet (6a) being disposed farther from the impeller (10) when viewed in the axial direction. The drive magnet (6b) and the driven magnet (6a) are disposed to face each other in the radial direction. Specifically, suction and repulsion caused by the magnetic force are generated in the radial direction between the drive magnet (6b) and the driven magnet (6a).

Since the relative position of the drive magnet (6b), the driven magnet (6a) and the bearing (A) and the center of the magnetic force are considerably misaligned along the axial direction as evident from Fig. 1 of Japanese Utility Model Laid-open Publication No. H6-304934, precession (motion similar to when a spinning top is about to stop) will occur with the bearing (A) as the fulcrum; that is, the rotation axis part (11) of the impeller will rotate in an inclined manner. Here, since the integral member including the impeller (10) rotates while being subject to precession, the hole shape of the bearing (13) will abrade away in a substantially conical hole shape (or horn shape or funnel shape, etc.) due to the inclined rotation axis part (11).

If the hole of the bearing (13) abrades away in a substantially conical shape, the integral member including the impeller (10) will be subject to further precession. Consequently, since the distance between the drive magnet (6b) and the driven magnet (6a) will close in even more, the magnetic force will also increase pursuant thereto. Due to the additional increase of the magnetic force, the abrasion of the hole of the bearing (13) will advance further in a vicious cycle. The abrasion of the hole of the bearing (13) will also advance further due to the foregoing "collision caused by the micro vibration in the axial direction."

Specifically, the abrasion of the hole of the bearing (13) is promoted as a result of the collision caused by the micro vibration in the axial direction when the rotation axis part (11) is rotating in an inclined manner due to the precession. Once the bearing (13) starts abrading away due to the precession caused by the inclination of the rotation axis part (11), the abrasion will advance at an accelerated pace due to the multiplier effect with the abrasion resulting from the collision caused by the micro vibration in the axial direction. Thus, the structure of Japanese Utility Model Laid-open Publication No. H6-304934 has low durability, and the structure of Japanese Utility Model Laid-open Publication No. H6-304934 could only be used in cases where the operating time is short or cases where the number of rotations is low.

When examining Japanese Utility Model Laid-open Publication No. H6-304934. from a different perspective, the center of the drive magnet part (6b) that is rotatively driven by the motor, the center of the driven magnet part (6a) that is formed integrally with the impeller (10), and the center of the member coupling the rotation axis part (11) and the driven magnet part (6a) are aligned in a straight line. In addition, the center of the magnetic force and the center of the member coupling the rotation axis part (11) and the driven magnet part (6a) are aligned in a straight line. Suction and repulsion caused by the magnetic force of the magnets in the radial direction are generated between the drive magnet part (6b) and the driven magnet part (6a). From the perspective of achieving a balance in the direction to which the magnetic force is applied, the appropriate design was considered to dispose the member coupling the rotation axis part (11) and the driven magnet part (6a) on the straight line where the suction and repulsion are generated due to the magnetic force.

Nevertheless, with this kind of arrangement, since the member coupling the rotation axis part (11) and the driven magnet part (6a) is disposed at the center of the magnet coupling (drive magnet part (6b) and driven magnet part (6a)), the bearing (13) must be disposed at a position that deviates from the center position of the magnet coupling. Since the bearing (13) is disposed at a position that deviates from the center position of the magnet coupling, as shown in the drawings of Japanese Utility Model Laid-open Publication No. H6-304934, the bearing (A) is disposed in a protruding manner from the driven magnet part (6a). Thus, the pump will become long in the thrust direction (axial direction) beyond necessity, and consequently become enlarged.

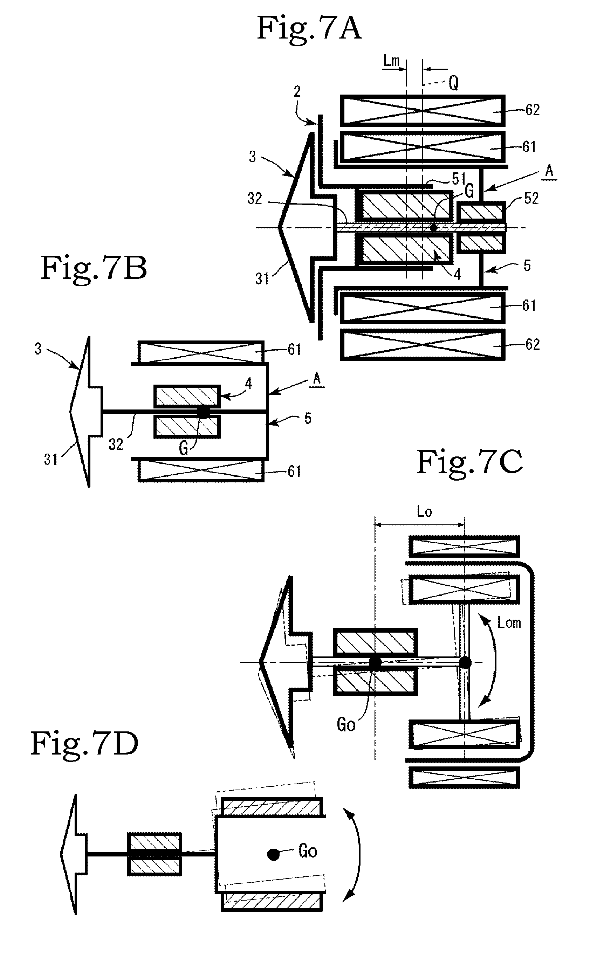

In addition, since the bearing (A) is disposed in a manner that deviates by an amount of distance Lo along the axial direction from the center of the direction of the suction and repulsion caused by the magnetic force, a bending moment Lom like a cantilever arm is applied to the rotation axis part (11) that is pivotally supported by the bearing (13). The rotation axis part (11) will rotate in an inclined manner due to the bending moment Lom, and precession will occur (refer to Fig. 7C and Fig. 7D). The bearing (13) will abrade away in a substantially conical shape (substantially horn shape) due to the precession of the rotation axis part (11), and its durability will deteriorate. Thus, an object (technical objective) of this invention is to prevent or reduce precession during the rotative drive of the impeller of a shaft of a magnet coupling-type water pump in which the bearing supports the impeller shaft only at one location, and to enable the stable rotation of the impeller.

Thus, as a result of intense study to overcome the foregoing problems, the present inventors resolved the foregoing problems by configuring the invention of claim 1 as a water pump comprising a pump cover, a motor case having a partition wall part which forms a pump chamber together with the pump cover, an impeller that is rotatably housed in the pump chamber, a shaft that is directly connected to the impeller and that is penetratively inserted from a shaft through-hole formed on the partition wall part into the motor case, a radial bearing for pivotally supporting the shaft, a rotor base formed with a substantially cylindrical tubular part and a shaft connecting part which is formed at a diametrical direction center in the tubular part and to which the shaft is press-fitted and fixed, an inner magnet that is fixed to an outer periphery of the rotor base, and a stator core that is positioned at an outer periphery of the inner magnet and mounted in the motor case, wherein a substantially cylindrical bearing housing part is formed in the partition wall part with the shaft through-hole as a diametrical center, the radial bearing is inserted and fixed to the bearing housing part along an axial direction, the radial bearing is disposed in the rotor base, and an axial direction overall length of the radial bearing is positioned within a substantial area of an axial direction overall length of the inner magnet.

Certain optional enhancements to the water pump are set out in the appended dependent claims.

The present inventors additionally resolved the foregoing problems by configuring the invention of claim 2 as the water pump according to claim 1, wherein the axial direction overall length of the radial bearing intersects with a virtual center line of the axial direction overall length of the inner magnet. The present inventors additionally resolved the foregoing problems by configuring the invention of claim 4 as the water pump according to claim 1, wherein the axial direction overall length of the radial bearing intersects with a virtual center line of the axial direction overall length of the inner magnet, and an axial direction overall length of a shaft connecting part of the rotor base is positioned within an area of the axial direction overall length of the inner magnet. The present inventors additionally resolved the foregoing problems by configuring the invention of claim 3 as the water pump according to any one of claims 1, 2 and 3, wherein a thrust bearing is mounted at the location of the shaft connecting part of the rotor base via an elastic member, and the radial bearing and the thrust bearing are in contact with each other in a mutually slidable manner.

One of the advantages of the invention of claim 1 is that as a result of disposing the entire thrust direction of the radial bearing in the area of the axial direction of the inner magnet, precession will not occur easily to the shaft of the inner rotor, and abrasion of the radial bearing is inhibited. Thus, the life of the radial bearing is extended, and the life of the electric water pump is consequently extended. Another advantage is that, since the entire axial direction length of the radial bearing is fitted in the area of the axial direction of the inner magnet, the axial direction length of the electric water pump can be shortened, and the overall water pump can be further miniaturized and made lighter.

With the invention of claim 2, the axial direction overall length of the radial bearing intersects with the virtual center line of the axial direction overall length of the inner magnet. Consequently, one of the advantages of this configuration is that it will be more difficult for precession to occur to the shaft. One of the advantages of the invention of claim 3 is that, by adopting a configuration where the radial bearing and the connecting part formed with a hole part for press-fitting the shaft of the rotor base are fitted in the area of the axial direction of the inner magnet, the dimension of the overall pump can be made the smallest.

One of the advantages of the invention of claim 4 is that the micro vibration in the axial direction that occurs in the electric water pump can be absorbed by using the elastic member, and it is possible to prevent shock being inflicted on the radial bearing. In particular, ceramic that is susceptible to shock can also be used as the bearing. As a result of being able to use ceramic as the thrust bearing, the functions of high heat resistance, chemical resistance (coolant), high degree of hardness, and high durability can be realized, deterioration with age will be minimal, and the bearing life can be extended.

Another advantage is that, since the elastic member is mounted between the housing part and the radial bearing, even if the shaft of the impeller is subject to precession, since the back face side of the thrust bearing is buffered and protected by the elastic member, the thrust bearing is able to continue sliding uniformly relative to the radial bearing based on the elasticity and flexibility of the elastic member. Thus, a radial bearing made of carbon can be subject to abrasion uniformly along the axial direction, and the bearing life of the radial bearing can be extended.

Some examples of water pumps according to the present invention will now be described with regard to the accompanying drawings, in which:
Fig. 1A is an a longitudinal side view of the water pump of the present invention, and Fig. 1B is an expanded view of section (α) of Fig. 1A;
Fig. 2A is a longitudinal side view of a state where the motor case and the impeller part and the radial bearing are separated, and Fig. 2B is a perspective view of the relevant part of the motor case and the radial bearing being partially cut out;
Fig. 3A is a longitudinal side view of a state where the inner rotor and the protective member are separated, and Fig. 3B is a longitudinal side view showing a state where the rotor base and the thrust bearing and the elastic member are separated;
Fig. 4A is a longitudinal side view of a state where the radial bearing that was inserted and fixed to the motor case and the inner rotor are separated, and Fig. 4B is an expanded sectional view of the location where the radial bearing and the thrust bearing are in sliding contact;
Fig. 5A is an expanded longitudinal side view showing a state where the radial bearing and the inner rotor are combined, and Fig. 5B is a schematic diagram of a state where the radial bearing and the shaft connecting part are fitted in the area of the axial direction overall length of the inner magnet;
Fig. 6A is a schematic diagram of a configuration where the radial bearing intersects the virtual line at the axial direction center of the inner magnet, Fig. 6B is a schematic diagram of a state where the radial bearing is fitted in the area of the axial direction overall length of the inner magnet, and Fig. 6C is a schematic diagram of a state where the radial bearing is slightly protruding from the area of the axial direction overall length of the inner magnet; and
Fig. 7A is a schematic diagram showing a configuration of preventing precession in the first embodiment of the combination of the present invention, Fig. 7B is a schematic diagram showing a state where the axial direction of the radial bearing intersects with the center of gravity of the inner rotor, and Fig. 7C and Fig. 7D are schematic diagrams showing the conventional technology.

Embodiments of the present invention are now explained with reference to the attached drawings. The primary configuration of the present invention includes, as shown in Fig. 1, a pump cover 1, a motor case 2, an impeller 31, a shaft 32, a radial bearing 4, a rotor base 5, an inner magnet 61, a stator core 62 and the like. The pump casing is primarily configured from the pump cover 1 and the motor case 2, and the pump cover 1 has a suction port and a discharge port. The motor case 2 has a cylindrical side wall surface part 22 formed at the outer periphery of the partition wall part 21.

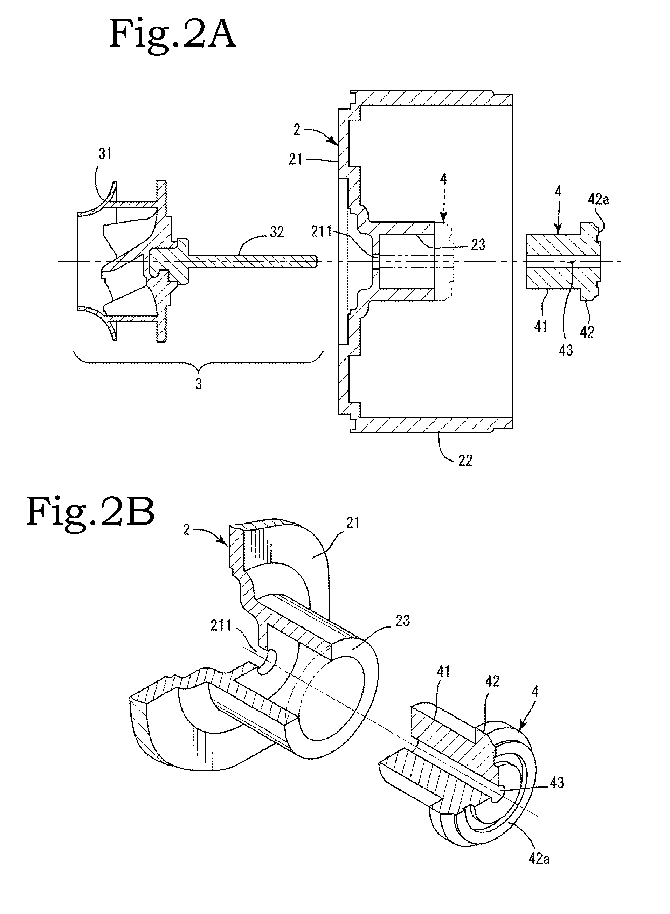

A pump chamber S is formed from an outer face side of the partition wall part 21 of the motor case 2 and an inner wall side of the pump cover 1 (refer to Fig. 1A). The partition wall part 21 in the motor case 2 is formed with a shaft through-hole 211 to which a shaft 32 described later penetrates, and a substantially cylindrical bearing housing part 23 is formed with the shaft through-hole 211 as its diametrical center (refer to Fig. 1, Fig. 2A). The bearing housing part 23 houses and fixes the radial bearing 4 described later.

The impeller member 3 is configured, as shown in Fig. 2A, from an impeller 31 and a shaft 32, and the impeller 31 is connected and fixed to the tip part of the shaft 32 via press fitting or screw fastening. In addition, since the shaft 32 portion is sometimes submerged, it is necessary to use a rust-proof material. Specifically, it is preferable to use stainless steel or the like. The impeller 31 is made of resin, and a metal member is inserted and formed integrally at the center part of the impeller 31, and the impeller 31 and the shaft 32 are formed integrally extremely solidly by the shaft 32 being press-fitted or screwed to the metal member.

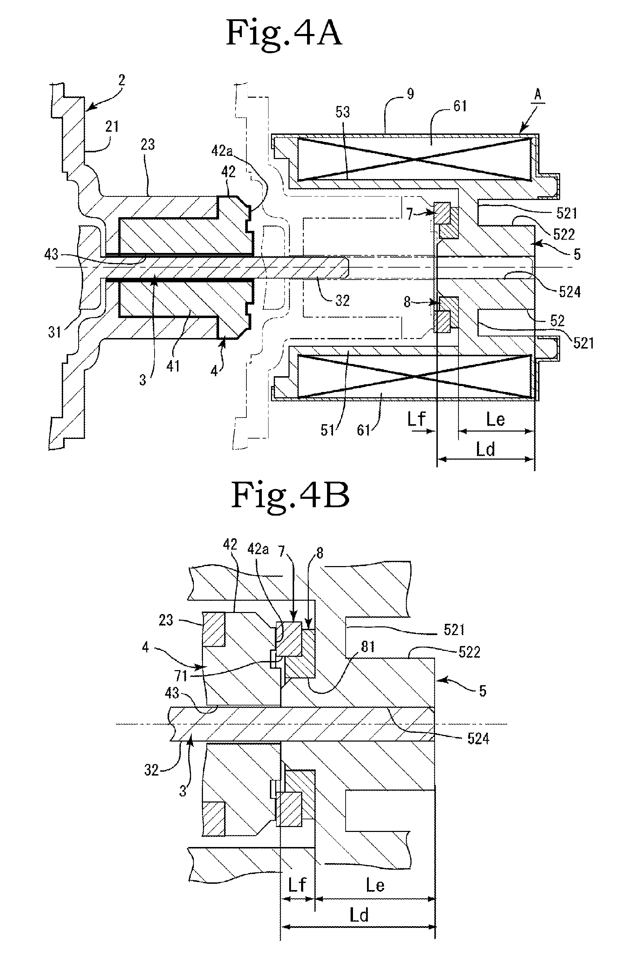

The radial bearing 4 is configured, as shown in Fig. 2, from a substantially cylindrical main body 41, and a substantially discoid flanged part 42. The main body 41 is housed and fixed in the bearing housing part 23 of the motor case 2 by being lightly press-fitted (with press-fitting means of a low press-fitting load), and the flanged part 42 is exposed from the bearing housing part 23 in a completely housed state (refer to Fig. 4A). The axial direction end face of the flanged part 42 is formed with a sliding contact surface 42a for sliding in the rotating direction while coming in contact with the thrust bearing 7 described later. Moreover, the radial bearing 4 is formed with a bearing hole 43 along the axial direction to which the shaft 32 penetrates and is pivotally supported in a smoothly rotatable manner. The area of the sliding contact surface 42a can be further increased with a flange shape to reduce the abrasion.

The material of the radial bearing 4 is carbon, but ceramic, metal, resin or the like may also be selected in consideration of the usage conditions. The radial bearing 4 is press-fitted and fixed to the bearing housing part 23 by being lightly press-fitted (with press-fitting means of a low press-fitting load). The radial bearing 4 rotatably supports the shaft 32 in the radial direction from the outside to prevent misalignment in the radial direction.

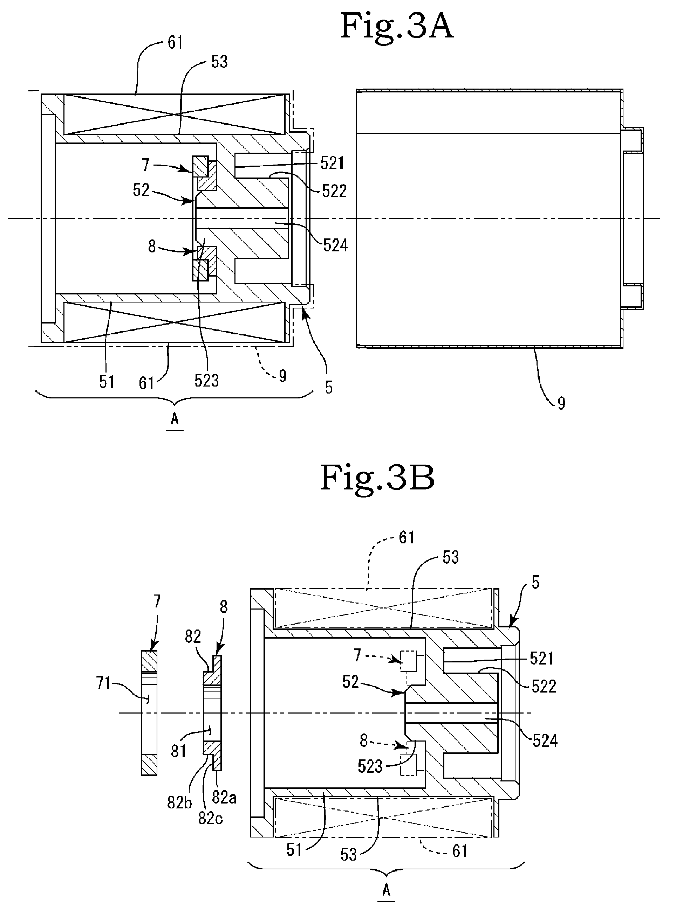

The rotor base 5 configures the inner rotor A, as shown in Fig. 3, together with an inner magnet 61 described later, a thrust bearing 7, an elastic member 8 and the like, rotates within the motor case 2, and causes the impeller 31 and the shaft 32 to rotate. The rotor base 5 is formed with a shaft connecting part 52 having a connecting through-hole 524 on the inner periphery side of the cylindrical tubular part 51 and at a position to be the diametrical direction center. The shaft connecting part 52 is formed with a flange shaped plate 521, a press-fit supporting part 522 and a protruding part 523. The flange shaped plate 521 is of a thin plate shape formed at the inner periphery side of the tubular part 51 and orthogonal to the axial direction of the tubular part 51 (refer to Fig. 3A).

The press-fit supporting part 522 is formed in a substantially flat cylindrical shape, and a protruding part 523 is formed on the side that is opposite to the side where the press-fit supporting part 522 of the flange shaped plate 521 is formed (refer to Fig. 3B). Moreover, the connecting through-hole 524 is formed at a diametrical center position of the flange shaped plate 521, the press-fit supporting part 522 and the protruding part 523 along the axial direction of the tubular part 51. The shaft 32 is press-fitted and fixed to the connecting through-hole 524. The structure is such that the radial bearing 4 and the bearing housing part 23 are easily inserted into the inner periphery side of the tubular part 51. A mounting groove 53 for mounting the inner magnet 61 is formed at the outer periphery side of the tubular part 51 of the rotor base 5 along the circumferential direction.

The rotor base 5 is formed of iron-based metal. Stainless steel is more preferably used for corrosion protection. Since the rotor base 5 made of iron-based metal is disposed on the inner periphery side of the inner magnet 61, the magnetic force of the inner magnet 61 will not leak to the inner periphery side, and most of it is discharged toward the outer periphery side. Since the stator core as an electromagnet is disposed in the vicinity on the outer periphery side, the magnetic force will not be generated wastefully, and the magnetic force can be used with high efficiency. In order to prevent the magnetic force from escaping to the opposite side of a direction in which the magnetic force is to be used, the foregoing rotor base is disposed on the inner periphery side that is opposite to the side of the direction in which the magnetic force is to be used. Moreover, in Fig. 1B and Fig. 3A, a protective member 9 functions to cover and protect the inner magnet 61 in a state where the inner magnet 61 is mounted on the rotor base 5.

The inner magnet 61 is a plastic magnet that is integrally molded with the rotor base 5, and the melted plastic magnet is poured in the mounting groove 53 of the rotor base 5 and hardened by being cooled, and the inner magnet 61 as a plastic magnet is thereby fixed to the rotor base. Accordingly, the inner magnet 61 as a plastic magnet is a result of mixing bonding resin with fine magnet powder, and, by cooling and solidifying this while applying magnetic force during the melting process, the direction of the magnetic force becomes aligned and is able to maximize its effect as a magnet.

A standard ferritic magnet may be used for the magnet part of the inner magnet 61, but a neodymium-based magnet (main raw materials of Nd (neodymium), Fe (iron) and B (boron)) is preferably used in order to exhibit even greater magnetic force. In the embodiments of the present invention, a neodymium-based plastic magnet is used as the inner magnet 61, but a ferritic plastic magnet may also be used. In addition, a standard sintered magnet may also be affixed to the rotor base 5 with an adhesive or the like.

The stator core 62 is specifically an electromagnet, and may be of a laminated structure where numerous thin iron plates are laminated together, or of a structure where a winding is wound several ten times to several hundred times around an integrally structured member that is formed by sintering fused iron powder. The stator core 62 itself has an even number of magnetic force generation parts in the circumferential direction, and the space between the magnetic force generation parts is referred to as a slot, and normally 6 or 12 slots are used. The stator core 62 is fixed to the inside of the motor case 2 (refer to Fig. 1A).

Moreover, as the pole number of the inner magnet 61, 4 poles or 8 poles are often used, and this is decided according to the number of slots. The rotative drive force to be applied to the inner magnet 61 mounted on the rotor base 5 will change by sequentially switching the direction or size of the magnetic force of the stator core 62, and the shaft 32 and the impeller 31 are caused to rotate together with the rotor base 5.

As shown in Fig. 1, Fig. 4, and Fig. 5A, the thrust bearing 7 and the elastic member 8 are mounted on the rotor base 5. The thrust bearing 7 is to be used together with the radial bearing 4 and functions as a support in the axial direction of the rotor base 5, and the thrust bearing 7 rotates being in contact with the sliding contact surface 42a of the radial bearing 4. The elastic member 8 absorbs the micro vibration in the axial direction of the shaft 32, and protects the thrust bearing 7 from shock. As a result of the elastic member 8, a ceramic material that is susceptible to shock can be used as the thrust bearing 7. Moreover, due to the absorption of the micro vibration of the shaft 32, the elastic deformation of the elastic member 8 is able to correct the inclined surface contact of the bearing surface of the thrust bearing 7 caused by the working accuracy, and the biased abrasion caused by the contact with the sliding contact surface of the radial bearing 4 can also be prevented.

The thrust bearing 7 is made of material such as SiC (silicon carbide), alumina or other ceramics, disposed between the radial bearing 4 and the rotor base 5, and is a bearing that functions to reduce the sliding resistance during the rotation in a load condition in the axial direction. In addition, the elastic member 8 is disposed between the thrust bearing 7 and the rotor base 5. The elastic member 8 is formed from an elastic member
such as rubber, and it is preferable to use a material having favorable vibration absorption properties.

As shown in Fig. 3B, the elastic member 8 is formed in a substantially ring shape, and a through-hole 81 is formed at the center position in the diametrical direction, and the outer periphery part 82 is formed from a large diameter part 82a and a small diameter part 82b. A stepped part 82c is formed as a flat surface at the stepped surface of the large diameter part 82a and the small diameter part 82b. The elastic member 8 is installed in and fixed to the rotor base 5 by the through-hole 81 being penetrated by the protruding part 523 in the shaft connecting part 52 of the rotor base 5, and the large diameter part 82a side coming in contact with the flange shaped plate 521 of the shaft connecting part 52.

The inner diameter of the axial hole 71 of the thrust bearing 7 is formed to be slightly smaller than the outer diameter of the small diameter part 82b of the elastic member 8, and the axial hole 71 of the thrust bearing 7 is fixed to the small diameter part 82b of the elastic member 8 by being lightly press-fitted thereto. As described above, the inner magnet 6 is mounted on the outer periphery side face of the tubular part 51 of the
rotor base 5, the thrust bearing 7 and the elastic member 8 are mounted on the inside of the tubular part 51, and the combination thereof is referred to as an inner rotor A.

The assembled state in the present invention is now explained. The shaft 32 is rotatably supported only by the radial bearing 4 and the thrust bearing 7. The shaft 32 is fixed to the shaft connecting part 52 of the rotor base 5 by being press-fitted thereto. The shaft 32 is press-fitted to the shaft connecting part 52 in the rotor base 5, but the location that is press-fitted is a position that is farthest as possible from the impeller 31 (or on the same plane as the axial end face of the shaft 32).

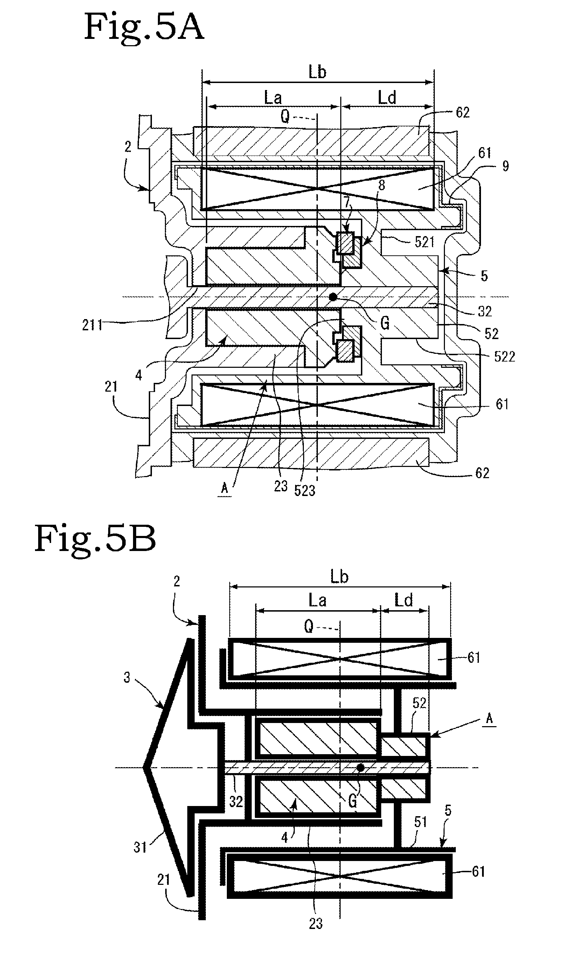

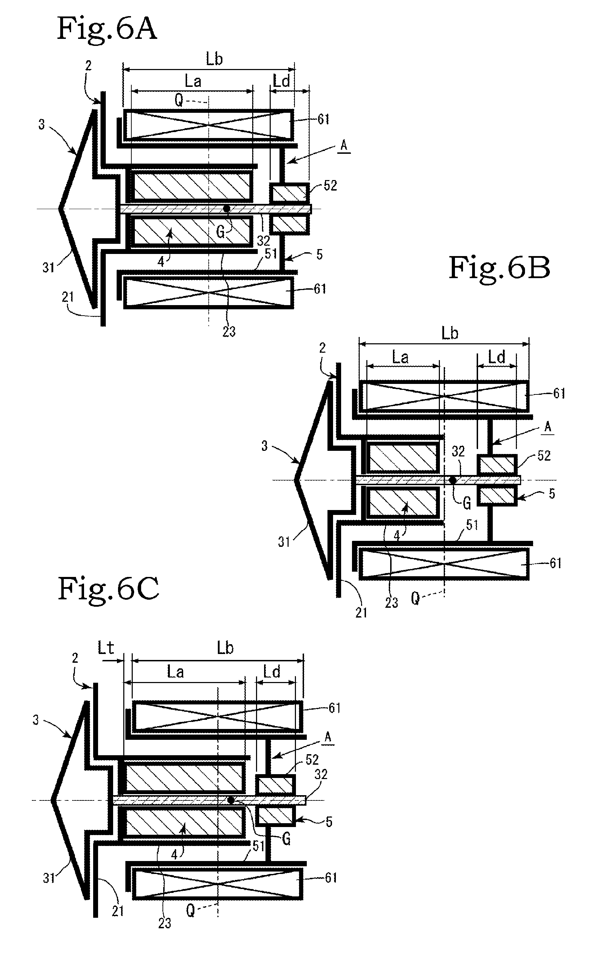

The foregoing configuration comprises the following conditions. Foremost, the radial bearing 4 is disposed in the rotor base 5, and a length La as the axial direction overall length of the radial bearing 4 is positioned within a substantial area of a length Lb as the axial direction overall length of the inner magnet 61. Specifically, the radial bearing 4 is configured such that its overall (entire) length in the axial direction fits in an area of the axial direction overall length of the inner magnet 61 (refer to Fig. 5, Fig. 6A, Fig. 6B). Moreover, the present invention includes cases where the end part of the axial direction overall length of the radial bearing 4 slightly protrudes from an area of the axial direction overall length of the inner magnet 61. Specifically, the axial direction overall length of the radial bearing 4 is positioned within a substantial area of the axial direction overall length of the inner magnet 61. This slight protrusion amount Lt is approximately several millimeters; specifically, 1 to 5 millimeters (refer to Fig. 6C).

Moreover, with the radial bearing 4, there are cases where the axial direction overall length intersects with a virtual center line Q of the axial direction overall length of the inner magnet 61, and this a particularly preferred configuration of the present invention (refer to Fig. 5, Fig. 6A). The virtual center line Q is a virtual line in a direction of the axial direction center position of the inner magnet 61 and which is orthogonal to the axial direction. In other words, the foregoing configuration is a state where the radial bearing 4 crosses the center of the length of the axial direction overall length of the inner magnet 61 along the axial direction. Moreover, the radial bearing 4 sometimes configured such that its axial direction overall length intersects with the virtual center line Q of the axial direction overall length of the inner magnet 61, and the axial direction overall length of the shaft connecting part 52 of the rotor base 5 is positioned in an area of the axial direction overall length of the inner magnet 61, and this is an even more favorable configuration (refer to Fig. 5).

Foremost, a total length Ld as the combination of the length La as the axial direction overall length of the radial bearing 4 and the overall length of the press-fitted area of the shaft connecting part 52 of the rotor base 5 is configured to fit within the length Lb of an area of the axial direction overall length of the inner magnet 61. Consequently, foremost, a gap Lm between the position of the radial bearing 4 and the virtual center line Q of the axial direction center position of the inner magnet 61 can be made extremely small (refer to Fig. 7A). Moreover, when viewing the overall length of the pump in the axial direction, the length in such axial direction can be made to be the smallest (refer to Fig. 5B, Fig. 7A).

To put it differently, with this configuration, the inner rotor A can be hypothesized as follows. Specifically, this structure will be a state where the center of gravity G of the inner rotor A is positioned in an area of the length as the axial direction overall length of the radial bearing 4. In other words, this structure is similar a configuration where, when hypothesizing and viewing the tubular part 51 of the rotor base 5 as a substantially cup shape, the shaft 32 enters the tubular part 51 of the rotor base 5 in a cup shape, and the axial end part of the shaft 32 is fixed to the bottom of the cup (refer to Fig. 7B).

Here, the radial bearing 4 also fits in the tubular part 51 hypothesized as a cup shape, and the position of the center of gravity G of the inner rotor A is set so that it fits in an area of the length La of the axial direction overall length of the radial bearing 4.

Consequently, since the center of gravity G of the inner rotor A is positioned in an area of the length La of the axial direction overall length of the radial bearing 4 even if the rotor base 5, which is hypothesized as a cup shape, rotates, the rotor base 5 will rotate stably without being subject to a considerable runout (refer to Fig. 5B). In other words, if the foregoing configuration is ensured, the shaft 32 will not tilt in the axial direction relative to the radial bearing 4, precession of the shaft 32 will not occur, and the bearing hole 43 of the radial bearing 4 will not abrade away in a conical hole (funnel) shape.

Fig. 7C is a schematic diagram of conventional technology, and the radial bearing portion and the inner magnet portion are separately widely by a gap Lo, a bending moment is applied to the shaft due to the magnetic force of the inner magnet mounting part with the pivotally supporting portion of the radial bearing as the supporting end and other factors, and the shaft will consequently collapse and precession will occur easily. Similarly, Fig. 7D also represents a schematic diagram of conventional technology in a different shape. Here, an axial end part of the shaft is fixed to the bottom part from the side that is opposite to the opening portion of the inner rotor hypothesized as a cup shape, the position of the center of gravity Go of the inner rotor is separated from the position of the radial bearing, and it is possible to confirm that the inner rotor is subject to considerable runout and precession as a result of the shaft rotating. Specifically, with the conventional technology, precession will occur to the shaft.

The characteristics of the present invention which enables a configuration where the shaft connecting part 52 of the rotor base 5 does not protrude from an area of the length Lb as the axial direction overall length of the inner magnet 61 is now explained. Specifically, since the protruding part 523 is formed to the shaft connecting part 52 of the rotor base 5 toward the impeller 31 side, the press-fit length can be secured longer for the portion of the protruding dimension Lf of the protruding part 523 in addition to the press-fit depth dimension Le of the press-fit supporting part 522. Consequently, the total dimension Ld of the press-fit depth of the shaft 32 of the shaft connecting part 52 is increased, the shaft 32 and the rotor base 5 are connected and fixed solidly, the shaft 32 and the rotor base 5 become a rigid body, and an extremely solid configuration is realized. In other words, the protruding part 523 is disposed on the inner periphery side in the radial direction, the thrust bearing 7 is disposed on the outer periphery side in the radial direction, and the protruding part 523 and the thrust bearing 7 are made to overlap when viewed from the axial direction. Consequently, the length of the axial direction can be made to be even more compact, the configuration where both the radial bearing 4 and the shaft connecting part 52 do not protrude from an area of the length Lb as the axial direction overall length of the inner magnet 61 can be realized.

With the present invention, as described above, the length La as the axial direction overall length of the radial bearing 4 is positioned in an area of the length Lb as the axial direction overall length of the inner magnet 61. Moreover, it is standard for the stator core 62 and the position in the axial direction at the axial direction center of the inner magnet 61 to coincide, and the length Lb as the axial direction overall length of the inner magnet 61 and the length as the axial direction overall length of the stator core 62 are often approximately equal. As described above, the drive force based on magnetic force works in the radial direction between the stator core 62 and the inner magnet 61, and the inner rotor rotates with the radial bearing as the fulcrum.

According to the foregoing configuration, the force that is applied to the radial bearing 4 will work within the range of the axial direction overall length of the radial bearing 4, and will not work in the runout direction. Thus, precession of the inner rotor A including the shaft 32 is inhibited. Since the precession will not occur easily, the abrasion of the radial bearing can be inhibited considerably. This is an effect that is yielded by causing the position in the axial direction to which the drive force based on magnetic force is generated and the position in the axial direction of the radial bearing 4 to coincide. Moreover, with the radial bearing 4, preferably, the length La as the axial direction overall length intersects with the virtual center line Q of the axial direction overall length of the inner magnet 61.

With the foregoing configuration, since the radial bearing 4 is disposed across the center position in the axial direction to which the drive force based on magnetic force of the stator core 62 is applied, the generation of power that will induce precession to the shaft 32 can be made to be approximately zero or reduced even further. In addition, since the shaft connecting part 52 of the rotor base 5 fits in an area of the length Lb as the axial direction overall length of the inner magnet 61, the dimension of the overall electric water pump in the axial direction can be made to be the shortest.

Glossary of reference numerals used in the drawings:
- 1: pump cover
- 2: motor case
- 21: partition wall part
- 211: shaft through-hole
- 23: bearing housing part
- S: pump chamber
- 31: impeller
- 32: shaft
- 4: radial bearing
- 5: rotor base
- 52: shaft connecting part
- 61: inner magnet
- 62: stator core
- 7: thrust bearing
- 8: elastic member
- Q: virtual center line

## Claims

1. A water pump, comprising:
a pump cover (1);
a motor case (2) having a partition wall part (21) which forms a pump chamber (S) together with the pump cover (1);
an impeller (31) that is rotatably housed in the pump chamber (S);
a shaft (32) that is directly connected to the impeller (31) and that is penetratively inserted from a shaft through-hole (211) formed on the partition wall part (21) into the motor case (2);
a radial bearing (4) for pivotally supporting the shaft (32);
a rotor base (5) formed with a substantially cylindrical tubular part and a shaft connecting part (52) which is formed at a diametrical direction center in the tubular part and to which the shaft is press-fitted and fixed;
an inner magnet (61) that is fixed to an outer periphery of the rotor base (5); and
a stator core (62) that is positioned at an outer periphery of the inner magnet (61) and mounted in the motor case (2),
wherein a substantially cylindrical bearing housing part (23) is formed in the partition wall part (21) with the shaft through-hole (211) as a diametrical center, the radial bearing (4) is inserted and fixed to the bearing housing part (23) along an axial direction, the radial bearing (4) is disposed in the rotor base (5), and an axial direction overall length of the radial bearing (4) is positioned within a substantial area of an axial direction overall length of the inner magnet (61).

2. The water pump according to claim 1,
wherein the axial direction overall length of the radial bearing (4) intersects with a virtual center line (Q) of the axial direction overall length of the inner magnet (61).

3. The water pump according to claim 1,
wherein the axial direction overall length of the radial bearing (4) intersects with a virtual center line (Q) of the axial direction overall length of the inner magnet (61), and an axial direction overall length of a shaft connecting part (52) of the rotor base (5) is positioned within an area of the axial direction overall length of the inner magnet (61).

4. The water pump according to any one of claims 1, 2 and 3,
wherein a thrust bearing (7) is mounted at the location of the shaft connecting part (52) of the rotor base (5) via an elastic member (8), and the radial bearing (4) and the thrust bearing (7) are in contact with each other in a mutually slidable manner.
